# EUROPEAN PATENT SPECIFICATION

(11) **EP 2 567 850 B1**
(45) Date of publication and mention of the grant of the patent: **04.03.2015**
(21) Application number: 11180224.5
(22) Date of filing: 06.09.2011
(51) Int. Cl.: B60K 17/10, B60K 17/356, F16H 61/44, F16H 61/4043, F16H 61/444

(54) **Hydraulic four-wheel-drive working vehicle**
Hydraulisches Nutzfahrzeug mit Allradantrieb
Véhicule de travail hydraulique à quatre roues motrices

(43) Date of publication of application: 13.03.2013
(73) Proprietor: KANZAKI KOKYUKOKI MFG. CO., LTD., Amagasaki-shi, Hyogo 661-0981 (JP)
(72) Inventor: Yasuda, Toshifumi, Amagasaki-shi, Hyogo 661-0981 (JP); Sugimoto, Hiroshi, Amagasaki-shi, Hyogo 661-0981 (JP); Syokita, Hideaki, Amagasaki-shi, Hyogo 661-0981 (JP); Iida, Masaru, Amagasaki-shi, Hyogo 661-0981 (JP); Sakata, Koji, Amagasaki-shi, Hyogo 661-0981 (JP)
(74) Representative: Isarpatent

(56) References cited:
- EP-A2- 2 378 166
- FR-A1- 2 861 448
- US-B1- 6 382 340
- US-B1- 6 860 358

## Description

### BACKGROUND OF THE INVENTION

### Field of the Invention

The present invention relates to a hydraulic four-wheel-drive working vehicle.

### Related Art

For example, Japanese unexamined patent publication No. 2008-143206 (hereinafter, referred to as prior art document 1) discloses a hydraulic four-wheel-drive working vehicle. The hydraulic four-wheel-drive working vehicle includes a hydraulic pump, a first hydraulic motor and a second hydraulic motor. The hydraulic pump, the first hydraulic motor and the second hydraulic motor are fluidly connected to one another so as to form a closed circuit in series. The closed circuit includes a first hydraulic line, a second hydraulic line and a third hydraulic line.

The first hydraulic line is configured so as to supply pressurized fluid, which has been discharged from the hydraulic pump, to the first hydraulic motor. The second hydraulic line is configured so as to supply pressurized fluid, which has been discharged from the first hydraulic motor, to the second hydraulic motor. The third hydraulic line is configured so as to supply pressurized fluid, which has been discharged from the second hydraulic motor, to the hydraulic pump.

The pressurized fluid from the hydraulic pump is supplied through the first hydraulic line to the first hydraulic motor so that the first hydraulic motor drives rear wheels. The pressurized fluid, which has been discharged from the first hydraulic motor, is supplied through the second hydraulic line to the second hydraulic motor so that the second hydraulic motor drives front wheels.

The hydraulic four-wheel-drive working vehicle disclosed in the prior art document 1 is provided with bypass fluid lines that bypass the first and second hydraulic motors, respectively, and bypass valves arranged in the respective bypass fluid lines. A manual operation of the bypass valve into an opened status ceases supply of the pressurized fluid from the hydraulic pump to the corresponding hydraulic motor.

The configuration allows the fluid to be circulated in the closed circuit when the working vehicle is forcibly towed in a state where an engine is in a halting condition or the like so that the front and rear wheels that are operatively connected to the first and second hydraulic motors, respectively, can be rotated. However, the configuration is merely capable of selecting whether or not the pressurized fluid bypasses the corresponding hydraulic motor.

In the hydraulic four-wheel-drive working vehicle, in a case where a substantial load for travel is applied to one of the hydraulic motors that is positioned on an upstream side in the pressurized fluid flowing direction (for example, in a case of climbing up a slope) at a forward travel or a rearward travel of the vehicle, it becomes difficult to drive the corresponding hydraulic motor by pressurized fluid that has been discharged from the hydraulic pump. Accordingly, a hydraulic pressure of the first hydraulic line or the third hydraulic line is increased to be excessively high during travel of the working vehicle, which results in a leakage of pressurized fluid from the first hydraulic line and/or the first hydraulic motor, or the third hydraulic line and/or the second hydraulic motor.

If a hydraulic motor of the first hydraulic motor unit is made difficult to be driven, for example, when the working vehicle travels forward, the pressurized fluid leaks from the first hydraulic line and/or the hydraulic motor of the first hydraulic motor unit, and an amount of the pressurized fluid that is discharged from a hydraulic motor of the second hydraulic motor unit is reduced. This situation causes lack of the pressurized fluid in the third hydraulic line that is connected to a vehicle-forward-movement low pressure side of the hydraulic pump, and may also cause a problem that air is suctioned into the closed circuit, which leads to an unstable four-wheel-drive condition.

### SUMMARY OF THE INVENTION

In view of the prior art, it is an object of the present invention to provide a hydraulic four-wheel-drive working vehicle that includes a hydraulic pump, a first hydraulic motor, a second hydraulic motor, a first hydraulic line fluidly connecting the hydraulic pump and the first hydraulic motor, a second hydraulic line fluidly connecting the first and second hydraulic motors, and a third hydraulic line fluidly connecting the second hydraulic motor and the hydraulic pump, the working vehicle being capable of effectively preventing hydraulic pressure of the first hydraulic line (or the third hydraulic line) from being excessively high as well as preventing shortage of pressurized fluid in the third hydraulic line (or the first hydraulic line), thereby enhancing travel stability.

In order to achieve the object, one aspect of the present invention provides a hydraulic four-wheel-drive working vehicle that includes at least one hydraulic pump operatively driven by a driving power source, a first hydraulic motor unit having including at least one hydraulic motor that drives a pair of right and left first wheels arranged on one side in a vehicle longitudinal direction, and a second hydraulic motor unit having at least one hydraulic motor that drives a pair of right and left second wheels arranged on the other side in the vehicle longitudinal direction, wherein at least one of the hydraulic pump and a group of the hydraulic motors of the first and second hydraulic motor units is of a variable displacement type, and wherein the hydraulic pump, the hydraulic motor of the first hydraulic motor unit and the hydraulic motor of the second hydraulic motor unit are fluidly connected in series to one another to form a closed circuit, wherein the closed circuit includes a first hydraulic line for sending pressurized fluid that has been discharged from the hydraulic pump to the hydraulic motor of the first hydraulic motor unit at a forward movement of the vehicle, a second hydraulic line for sending pressurized fluid that has been discharged from the hydraulic motor of the first hydraulic motor unit to the hydraulic motor of the second hydraulic motor unit at the forward movement of the vehicle, and a third hydraulic line for sending pressurized fluid that has been discharged from the hydraulic motor of the second hydraulic motor unit to the hydraulic pump at the forward movement of the vehicle, and wherein the closed circuit further includes a first bypass line that causes at least a part of pressurized fluid in the first hydraulic line to bypass the hydraulic motor of the first hydraulic motor unit to be supplied to the second hydraulic line, the first bypass line having an orifice inserted therein.

In the one aspect of the present invention, the bypass line with the orifice being inserted therein causes at least a part of pressurized fluid in the first hydraulic line to bypass the hydraulic motor of the first hydraulic motor unit to be supplied to the second hydraulic line, in a case where the working vehicle receive a substantially large travel load when moving on a sloping road or the like. Accordingly, the first hydraulic line can be effectively prevented from having an excessively high pressure and the third hydraulic line can be effectively prevented from being short of pressurized fluid. Therefore, travel stability of the hydraulic four-wheel-drive working vehicle can be improved.

### BRIEF DESCRIPTION OF THE DRAWINGS

Fig. 1 is a side view of a working vehicle according to one embodiment of the present invention.
Fig. 2 is a plan view of the working vehicle.
Fig. 3 is a hydraulic circuit diagram of the working vehicle.
Fig. 4 is a hydraulic circuit diagram of a first axle-driving device of the working vehicle, and shows an aspect in which the first axle-driving device includes a pair of wheel motor devices.
Fig. 5 is a vertical cross sectional view of a first wheel motor device.
Figs. 6A and 6B are vertical cross sectional views of the first wheel motor devices that are arranged on right and left sides of the working vehicle, respectively.
Figs. 7A- 7C are hydraulic circuit diagrams of the first axle-driving device of the working vehicle, and show an aspect in which the first axle-driving device includes a mechanical differential gear mechanism, an aspect in which the first axle-driving device includes a pair of hydraulic motor main bodies fluidly connected to each other, and an aspect in which the first axle-driving device includes a motor case accommodating a hydraulic pump main body as well as a hydraulic motor main body, respectively.
Fig. 8 is a hydraulic circuit diagram of a second axle-driving device of the working vehicle, and shows an aspect in which the second axle-driving device includes a pair of wheel motor devices.
Fig. 9A is a hydraulic circuit diagram of a working vehicle according an aspect in which each of the first and second axle-driving devices is provided with a switching valve, and shows a condition that a first hydraulic line has a hydraulic pressure lower than a predetermined threshold value.
Fig. 9B is a view for showing a flow of pressurized fluid in the vicinity of the switching valve at the condition shown in Fig. 9A.
Fig. 10A is a hydraulic circuit diagram corresponding to Fig. 9A, and shows a condition that the first hydraulic line has the hydraulic pressure higher than the predetermined threshold value.
Fig. 10B is a view for showing a flow of pressurized fluid in the vicinity of the switching valve at the condition shown in Fig. 10A.

### DETAILED DESCRIPTION OF THE PREFERRED EMBODIMENTS

Hereinafter, an embodiment will be described with reference to the accompanying drawings.

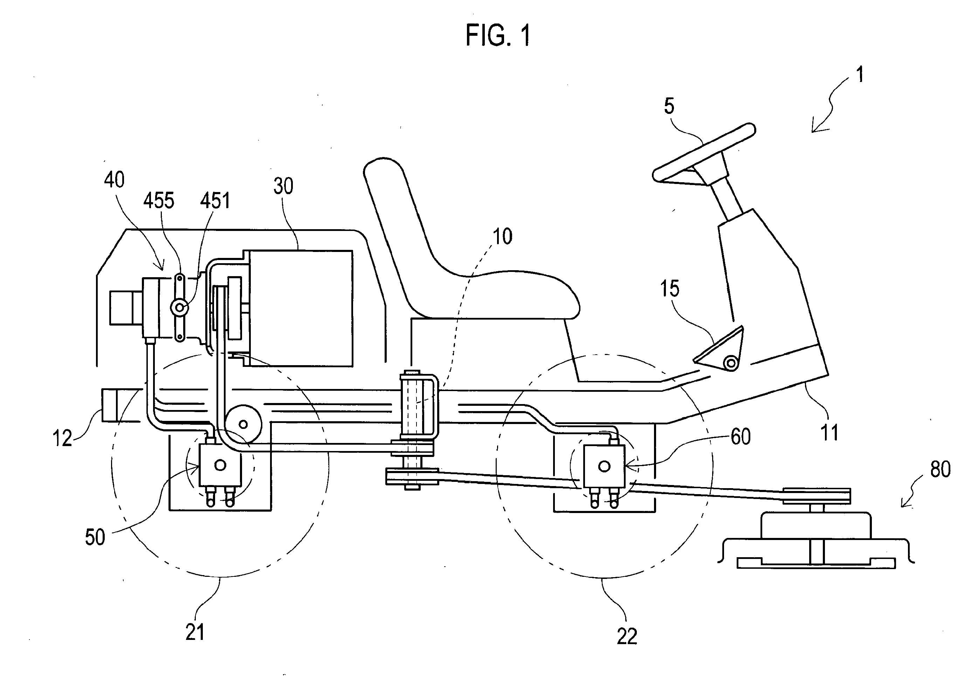

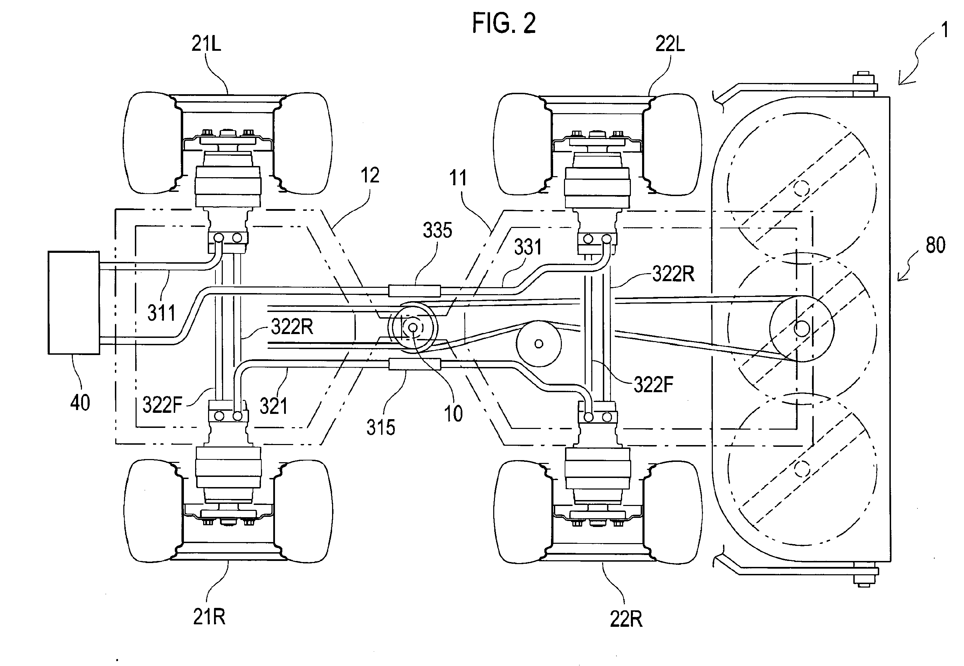

In the present embodiment, a hydraulic four-wheel-drive working vehicle 1 is embodied by a riding lawn mower of an articulate type, as shown in Figs. 1 and 2.

The working vehicle 1 includes a first frame 11, a second frame 12, a pair of right and left first driving wheels 21R, 21L, a pair of right and left second driving wheels 22R, 22L, a driving power source, at least one hydraulic pump unit 40, a first axle-driving device 50 and a second axle-driving device 60.

The first frame 11 includes a driver's seat, and is arranged on a first side (a front side in the present embodiment) in a vehicle longitudinal direction. The second frame 12 is arranged on a second side (a rear side in the present embodiment) in the vehicle longitudinal direction, and is connected to the first frame 11 in a swinging manner around a pivot shaft 10 along a substantially vertical direction.

The pair of right and left first driving wheels 21R, 21L are arranged on the first side in the vehicle longitudinal direction while the pair of right and left second driving wheels 22R, 22L are arranged on the second side in the vehicle longitudinal direction. The driving power source 30 is supported by the second frame 12. The hydraulic pump unit 40 includes at least one hydraulic pump main body 420 that is operatively driven by the driving power source 30.

The first axle-driving device 50 includes at least one first hydraulic motor main body 120 that drives the pair of right and left first driving wheels 21R, 21L, and is connected to the second frame 12. The second axle-driving device 60 includes at least one second hydraulic motor main body 620 that drives the pair of right and left second first driving wheels 21R, 21L, and is connected to the second frame 12.

In the present embodiment, the working vehicle 1 further includes a hydraulic steering mechanism 70, and a mower device 80 having a hydraulic lifting mechanism 85. The hydraulic steering mechanism 70 swings the first frame 11 relative to the second frame 12 about the pivot shaft 10 in conjunction with a manual operation on a steering member 5 capable of being manually operated. The mower device 80 is supported by the first frame 11 so as to be positioned outward (forward in the present embodiment) from the first driving wheels 21 in the vehicle longitudinal direction.

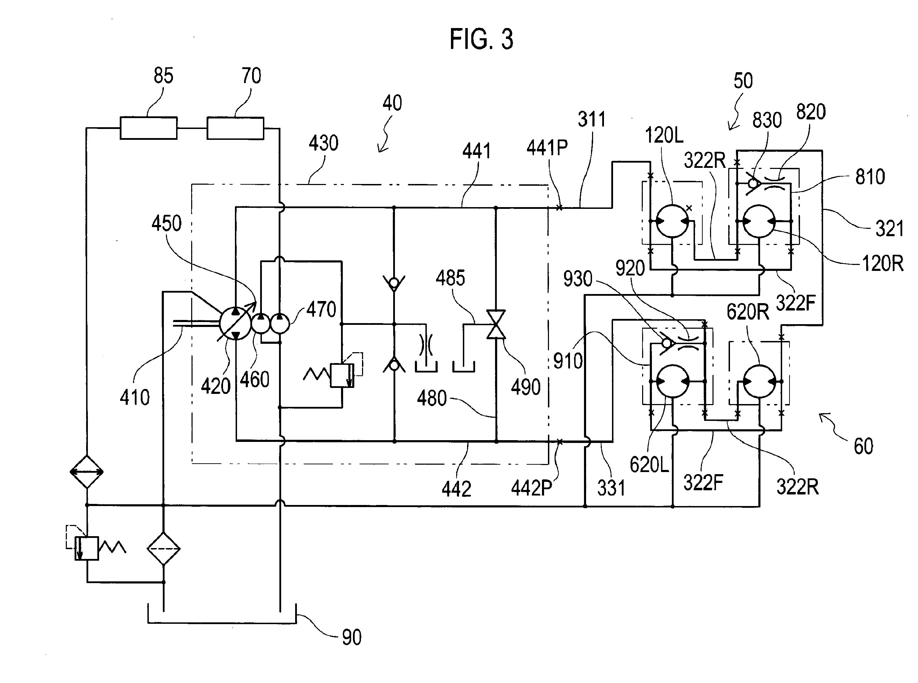

As shown in Fig. 3, the hydraulic pump unit 40 includes a pump shaft 410, a hydraulic pump main body 420 and a pump case 430. The pump shaft 410 is operatively connected to the driving power source 30. The hydraulic pump main body 420 is supported by the pump shaft 410 in a relatively non-rotatable manner with respect thereto. The pump case 430 supports the pump shaft 410 as well as forms a pump accommodating space for accommodating the hydraulic pump main body 420.

The hydraulic pump main body 420 is fluidly connected to the at least one first hydraulic motor main body 120 of the first axle-driving device 50 and the at least one second hydraulic motor main body 60 so as to form an HST in cooperation with the hydraulic motor main bodies 120, 620.

More specifically, the pump case 430 is provided with a pump-side first operation fluid passage 441 and a pump-side second operation fluid passage 442 that are fluidly connected to the hydraulic pump main body 420, as shown in Fig. 3.

Each of the pump-side first and second operation fluid passages 441, 442 has at least one end portion that is opened to an outer surface. The opened end portion of the pump-side first operation fluid passage 441 forms an operation fluid port 441P, and the opened end portion of the pump-side second operation fluid passage 442 forms an operation fluid port 442P.

In the present embodiment, the hydraulic pump main body 420 is of a variable displacement type in which a suction/discharge amount can be changed. More specifically, the hydraulic pump unit 40 includes an output adjusting member 450 (see Fig. 3) for changing the suction/discharge amount of the hydraulic pump main body 420 in accordance with an external operation, in addition to the above-mentioned components.

For example, the output adjusting member 450 includes a movable swash plate (not shown) that define a reciprocating range of pistons of the hydraulic pump main body 420, and a control shaft (see Fig. 1) that is operatively connected to the movable swash plate so as to slant the movable swash plate. In the present embodiment, the swash plate is capable of being slanted in both a normal direction and a reverse direction that are opposite from each other with a neutral position being sandwiched between them.

The control shaft 451 is operatively connected through a control arm 455 and a connecting member (not shown) to a speed-change operation member 15 that is formed as a seesaw pedal capable of being manually operated.

As shown in Fig. 3, the pump case is further provided with a bypass fluid passage 480 and a bypass valve 490. The bypass fluid passage 480 fluidly connects the pump-side first operation fluid passage 441 and the pump-side second operation fluid passage 442. The bypass valve 490 is capable of being operated from an outside, and is inserted into the bypass fluid passage 480.

The bypass valve 490 is configured so as to take a shutoff position and a connection position. The shutoff position causes the bypass fluid passage 480 to be in a shutoff state and also causes a drain fluid passage 480 to be disconnected from the bypass fluid passage 480. The connection position causes the bypass fluid passage 480 to be in a connection state and also causes the drain fluid passage 480 to be connected to the bypass fluid passage 480.

In the working vehicle 1, as shown in Fig. 3, the hydraulic pump main body 420 is configured so as to hydraulically drive both the first hydraulic motor main body 120 of the first axle-driving device 50 and the second hydraulic motor main body 620 of the second axle-driving device 60.

The first hydraulic motor main body 120 of the first axle-driving device 50 and the second hydraulic motor main body 620 of the second axle-driving device 60 are fluidly connected in series to the single hydraulic pump main body 420 in such a manner that the first axle-driving device 50 is positioned on an upstream side in a flow direction of HST operation fluid and the second axle-driving device 60 is positioned on a downstream side in the flow direction of HST operation fluid at a forward movement of the vehicle.

In the present embodiment, the hydraulic pump unit 40 further includes a first auxiliary pump main body 460 and a second auxiliary pump main body 470, in addition to the above-mentioned components. The first and second auxiliary pump main bodies 460, 470 are operatively driven by the pump shaft 410.

As shown in Fig. 3, the first auxiliary pump main body 460 functions as a charge pump for replenishing the HST with operation fluid. The second auxiliary pump main body 470 supplies operation fluid to the hydraulic steering mechanism 70 and the hydraulic lifting mechanism 85. The first auxiliary pump main body 460 may be embodied, for example, by a trochoidal pump, and the second auxiliary pump main body 470 may be embodied, for example, by a gear pump.

As shown in Fig. 3, the working vehicle 1 includes an external tank 90. The first and second auxiliary pump main bodies 460, 470 operate with using the external tank 90 as a fluid source.

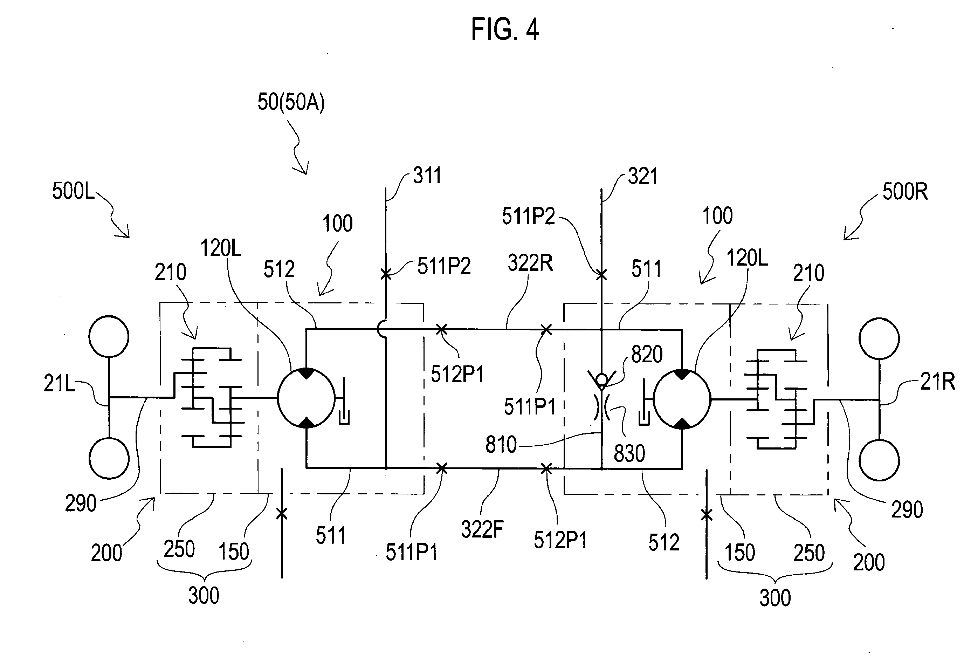

As shown in Fig. 4, the first axle-driving device 50 (50A) includes a left first wheel motor device 500L and a right first wheel motor device 500R. The left first wheel motor device 500L is configured so as to drive the left first driving wheel 21L. The right first wheel motor device 500R is configured so as to drive the right first driving wheel 21R.

The right and left first wheel motor devices 500R, 500L have a substantially same configuration to each other, and are mounted to the second frame 12 in a state where one wheel motor device is displaced by 180 degree with respect to the other one wheel motor device.

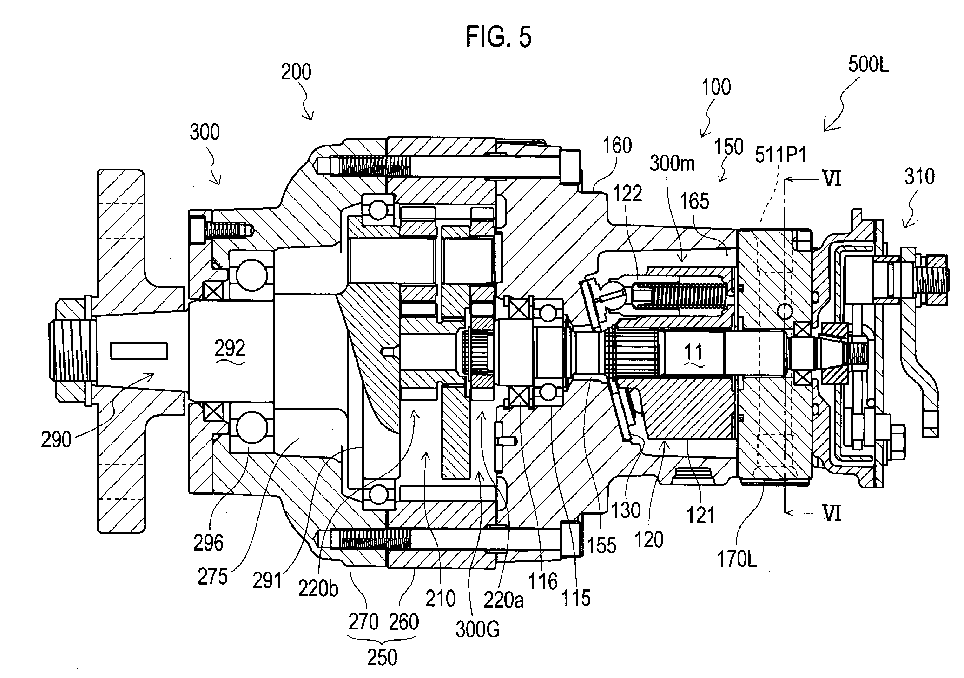

The first wheel motor device 500 includes the first hydraulic motor main body 120, a speed-reduction gear mechanism 210, an output member 290 and a casing 300, as shown in Figs. 4 and 5.

The first hydraulic motor main body 120 forms the HST in cooperation with the hydraulic pump main body 420. The speed-reduction gear mechanism 210 is configured so as to reduce a speed of a rotational power of the hydraulic motor main body 120. The output member 290 is configured so as to output the rotational power whose speed has been reduced by the speed-reduction gear mechanism 210 toward the corresponding driving wheel 21.

The casing 300 includes a motor case 150 and a speed-reduction gear case 250, and accommodates the first hydraulic motor main body 120 and the speed-reduction gear mechanism 210. In the casing 300, a motor space 300M that accommodates the first hydraulic motor main body 120 and is capable of storing fluid is liquid-tightly separated from a gear space 300G that accommodates the speed-reduction gear mechanism 210.

A detailed configuration of the first wheel motor device 500 will now be explained.

As shown in Fig. 5, the first wheel motor device 500L includes a hydraulic motor unit 100, a speed-reduction gear unit 200 and the output member 290.

The hydraulic motor unit 100 includes the first hydraulic motor main body 120 fluidly connected to the hydraulic pump main body 420. The speed-reduction gear unit 200 includes the speed-reduction gear mechanism 210 for reducing the speed of the rotational power of the first hydraulic motor main body 120. The output member 290 is configured so as to output the rotational power whose speed has been reduced by the speed-reduction gear mechanism 210 toward the corresponding driving wheel 21.

The hydraulic motor unit 100 includes the first hydraulic motor main body 120, a motor case 150 and a motor shaft 110. The motor case 150 forms the motor space 300M. The motor shaft 110 supports the first hydraulic motor main body 120 in a relatively non-rotatable manner with respect thereto, as shown in Figs. 4 and 5.

As shown in Fig. 5, the first hydraulic motor main body 120 includes a motor-side cylinder block 121 and plural motor-side pistons 122. The motor-side cylinder block 121 is supported by the motor shaft 110 in a relatively non-rotatable manner with respect thereto. The plural motor-side pistons 122 are accommodated in the motor-side cylinder block 121 in a relatively non-rotatable manner about an axis line with respect thereto but in a reciprocating manner along the axial line. The motor-side pistons are of a shoe type.

In the present embodiment, the first hydraulic motor main body 120 is of a fixed displacement type in which a suction/discharge amount is fixed. Therefore, the hydraulic motor unit 100 includes a fixed swash plate 130 that is directly or indirectly engaged with free ends of the motor-side pistons 122 to define a reciprocating range of the motor-side pistons 122, in addition to the above-mentioned components.

The motor case 150 includes a motor case main body 160 and a motor-side port block 170L. The motor case main body 160 is formed with an opening 165 through which the first hydraulic motor main body 120 is passed. The motor-side port block 170L is detachably connected to the motor case main body 160 so as to close the opening 165.

The motor case main body 160 is provided with an outlet port for flowing fluid outwardly from the motor space 300M formed by the motor case main body 160 and the motor-side port block 170L, and is fluidly connected to the external tank 90.

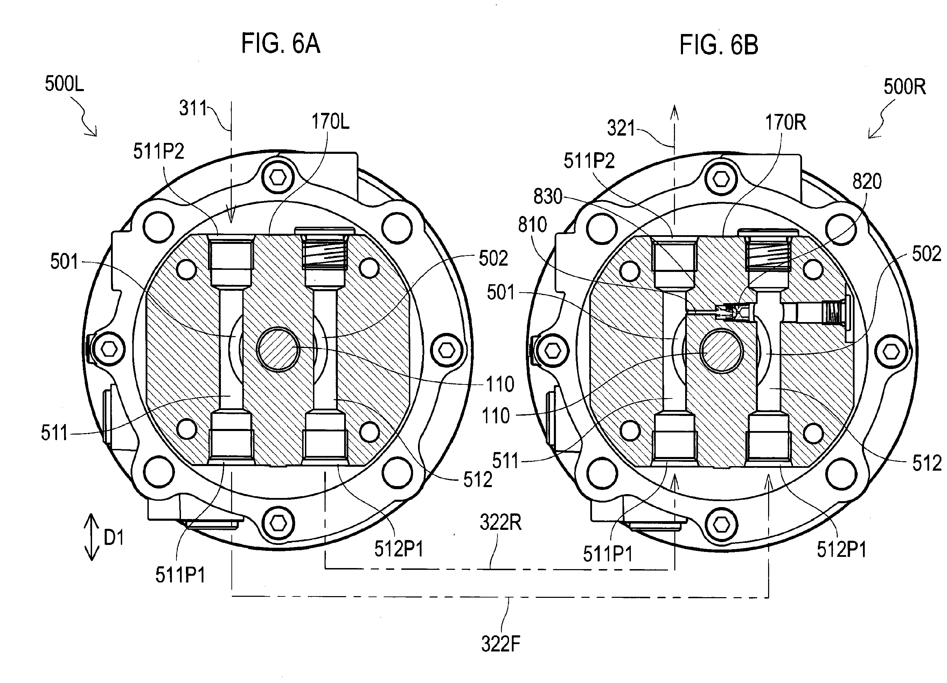

As shown in Figs. 4, 6A and 6B, the motor case 150 is provided with a motor-side first operation fluid passage 511 and a motor-side second operation fluid passage 512.

The motor-side first operation fluid passage 511 is fluidly connected to the first hydraulic motor main body 120. At least one end portion of the motor-side first operation fluid passage 511 is opened outwardly to form a motor-side operation fluid port 511P.

The motor-side second operation fluid passage 512 is fluidly connected to the first hydraulic motor main body 120. At least one end portion of the motor-side second operation fluid passage 512 is opened outwardly to form a motor-side operation fluid port 512P.

In the present embodiment, the motor-side first and second operation fluid passages 511, 512 are formed in the motor-side port block 170L.

As shown in Fig. 6, the motor-side port block 170 is formed with a first kidney port 501, a second kidney port 502, the motor-side first operation fluid passage 511 and the motor-side second operation fluid passage 512.

The first kidney port 501 is opened to a motor sliding surface with which the first hydraulic motor main body 120 is brought into contact in a sliding manner. The second kidney port 502 is opened to the motor sliding surface on an opposite side from the first kidney port 501 with the motor shaft 110 being as a reference. The motor-side first operation fluid passage 511 is fluidly connected to the first kidney port 501. The motor-side second operation fluid passage 512 is fluidly connected to the second kidney port 502.

At least one of the motor-side first and second operation fluid passages 511, 512 is opened at plural positions to an outer surface of the motor-side port block 170. As shown in Fig. 6, the motor-side first operation fluid passage 511 has plural operation fluid ports while the motor-side second operation fluid passage 512 has a single operation fluid passage.

The motor-side first operation fluid passage 511 has a first operation fluid port 511P1 facing toward one side in a first direction D1 that is one direction among directions orthogonal to the motor shaft 110, and a second operation fluid port 511P2 facing toward the other one side in the first direction D1. On the other hand, the motor-side second operation fluid passage 512 has only a first operation fluid port 512P1 facing toward the one side in the first direction D 1.

A operation fluid line connecting structure that fluidly connecting the hydraulic pump main body 420 to the right first hydraulic motor main body 120R and the left first hydraulic motor main body 120L, by taking, as an example, a case where the pump-side first operation fluid passage 441 becomes a high-pressure side and the pump-side second operation fluid passage 442 becomes a low-pressure side at the forward movement of the vehicle.

As shown in Figs. 2 to 4, the working vehicle 1 includes three main conduits forming first, second and third hydraulic lines 311, 321, 331, and also includes a pair of two sub conduits forming fourth and fifth hydraulic lines 322F, 322R on each of the front and rear sides.

The first hydraulic line 311 has a first end fluidly connected to the operation fluid port 441P of the pump-side first operation fluid passage 441. The third hydraulic line 331 has a first end fluidly connected to the operation fluid port 442P of the pump-side second operation fluid passage 442.

The first hydraulic line 311 has a second end fluidly connected to the second operation fluid port 511P2 of the motor-side first operation fluid passage 511 in the left motor-side port block 170L.

The fourth hydraulic line 322F has a first end fluidly connected to the first operation fluid port 511P1 of the motor-side first operation fluid passage 511 in the left motor-side port block 170L, and a second end fluidly connected to the first operation fluid port 512P1 of the motor-side second operation fluid passage 512 in the right motor-side port block 170R.

The fifth hydraulic line 322R has a first end fluidly connected to the first operation fluid port 512P1 of the motor-side second operation fluid passage 512 in the left motor-side port block 170L, and a second end fluidly connected to the first operation fluid port 511P1 of the motor-side first operation fluid passage 511 in the right motor-side port block 170R.

The second hydraulic line 321 has a first end fluidly connected to the second operation fluid port 511P2 of the motor-side first operation fluid passage 511 in the right motor-side port block 170R, and a second end fluidly connected to the second operation fluid port 511P2 of the motor-side first operation fluid passage 511 in the right motor-side port block for the second hydraulic motor main body 620 of the second axle-driving device 60.

With the above-explained configuration, the first hydraulic motor main body 120L of the left first wheel motor device 500L and the first hydraulic motor main body 120R of the right first wheel motor device 500R are fluidly connected in parallel to the hydraulic pump main body 420.

In the left motor-side port block 170L, the motor-side first operation fluid passage 511 becomes a high-pressure-side operation fluid passage at the forward movement of the vehicle. On the other hand, in the right motor-side port block 170R, the motor-side second operation fluid passage 512 becomes a high-pressure-side operation fluid passage at the forward movement of the vehicle.

Hereinafter, the second axle-driving device 60 will be explained.

The second axle-driving device 60 is configured to hydraulically drive the pair of right and left second driving wheels 22R, 22L by utilizing the pressurized fluid from the hydraulic pump main body 420.

As explained earlier, in the present embodiment, the first axle-driving device 50 and the second axle-driving device 60 are fluidly connected in series to the hydraulic pump main body 420. Therefore, the second axle-driving device 60 is driven by return fluid returned from the first axle-driving device 50 that is positioned on an upstream side in a flow direction of pressurized fluid at the forward movement of the vehicle.

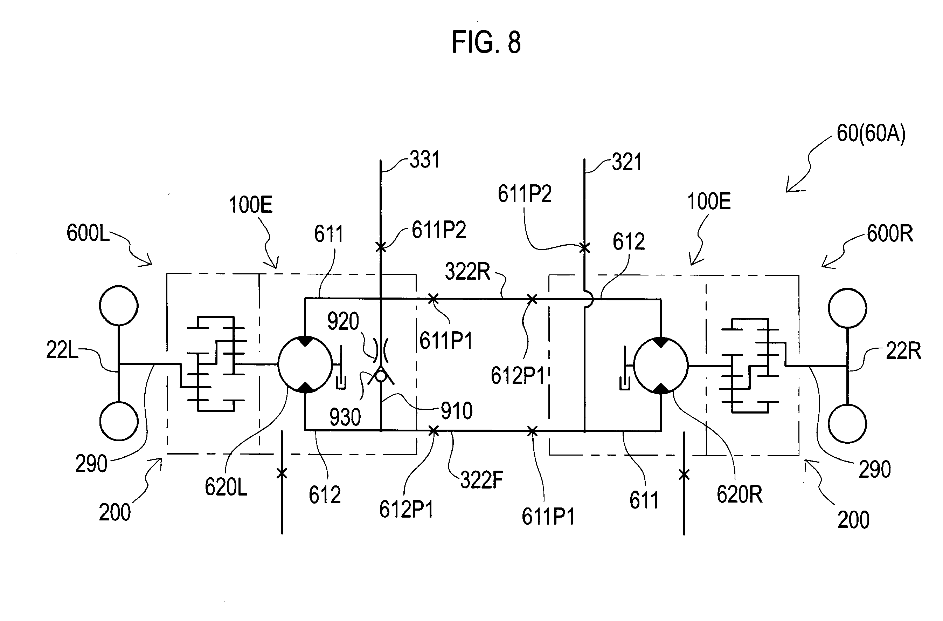

As shown in Fig. 8, the second axle-driving device 60 (60A) includes a pair of right and left second wheel motor device 600R, 600L that drives the pair of right and left second driving wheels 22R, 22L, respectively. The pair of right and left second wheel motor devices 600R, 600L have the substantially same configuration to each other.

The second wheel motor device 600 has the same configuration as the first wheel motor device 500 except that the hydraulic motor unit 100 is replaced by a hydraulic motor unit 100E.

The hydraulic motor unit 100E of the left second wheel motor device 600L includes a second hydraulic motor main body 620 (hereinafter, referred to as left second hydraulic motor main body 620L), and a pair of motor-side first operation fluid passage 611 and motor-side second operation fluid passage 612 that are fluidly connected to the left second hydraulic motor main body 620L.

The hydraulic motor unit 100E of the right second wheel motor device 600L includes the second hydraulic motor main body 620 (hereinafter, referred to as right second hydraulic motor main body 620R), and the pair of motor-side first operation fluid passage 611 and motor-side second operation fluid passage 612 that are fluidly connected to the right second hydraulic motor main body 620R.

As in the right and left first wheel motor devices 500R, 500L, the right and left second hydraulic motor main bodies 620R, 602L are fluidly driven by the single hydraulic pump main body 420 in a differential manner to each other.

With respect to a conduit connecting structure that fluidly connects the hydraulic pump main body 420 to the right and left second hydraulic motor main bodies 620R, 620L, as shown in Figs. 2 and 8, the main conduit forming the second hydraulic line 321 includes a flexible conduit 315 (see Fig. 2) inserted therein. One end of the main conduit is fluidly connected to the second operation fluid port 611P2 of the motor-side first operation fluid passage 611 in the right second wheel motor device 600R.

The fourth hydraulic line 322F has a first end fluidly connected to a first operation fluid port 611P1 of the motor-side first operation fluid passage 611 in the right second wheel motor device 600R, and a second end fluidly connected to a first operation fluid port 612P1 of the motor-side second operation fluid passage 612 in the left second wheel motor device 600L.

The fifth hydraulic line 322R has a first end fluidly connected to a first operation fluid port 612P1 of the motor-side second operation fluid passage 612 in the right second wheel motor device 600R, and a second end fluidly connected to a first operation fluid port 611P1 of the motor-side first operation fluid passage 611 in the left second wheel motor device 600L.

The main conduit forming the third hydraulic line 331 includes a flexible conduit 335 (see Fig. 2) inserted therein. One end of the main conduit is fluidly connected to the second operation fluid port 611P2 of the motor-side first operation fluid passage 611 in the left second wheel motor device 600L.

With the above-explained configuration, the second hydraulic motor main body 620L of the left second wheel motor device 600L and the second hydraulic motor main body 620R of the right second wheel motor device 600R are fluidly connected in parallel to the hydraulic pump main body 420.

In the right second wheel motor device 600R, the motor-side first operation fluid passage 611 becomes a high-pressure-side operation fluid passage at the forward movement of the vehicle. On the other hand, in the left second wheel motor device 600L, the motor-side second operation fluid passage 612 becomes a high-pressure-side operation fluid passage at the forward movement of the vehicle.

Next, a hydraulic circuit of the first axle-driving device 50 will be explained.

The hydraulic circuit of the first axle-driving device 50 can supply pressurized fluid in the first hydraulic line 311 inclusive of the pump-side first operation fluid passage 441, which becomes a high pressure at the forward movement of the vehicle, to the third hydraulic line 331 inclusive of the pump-side second operation fluid passage 442, which becomes a low pressure side at the forward movement of the vehicle, by causing the pressurized fluid to bypass at least the first hydraulic motor main body 120, out of the first hydraulic motor main body 120 of the first wheel motor device 500 of the first axle-driving device 50 and the second hydraulic motor main body 620 of the second wheel motor device 600 of the second axle-driving device 60.

In the present embodiment, as shown in Figs. 3 and 4, the hydraulic circuit of the working vehicle 1 is configured to cause a part of pressurized fluid in the first hydraulic line 311 to bypass only the first hydraulic motor main body 120 of the first wheel motor device 500 of the first axle-driving device 50 through a bypass fluid passage 810 so as to supply the part of pressurized fluid to the second hydraulic line 321 (inclusive of the motor-side first operation fluid passage 611 of the right second wheel motor device 600R of the second axle-driving device 60), that is, to the second hydraulic motor main body 620 of the second wheel motor device 600 of the second axle-driving device 60.

More specifically, the bypass fluid passage 810 is provided at the motor-side port block 170 of the right first wheel motor device 500R in the first axle-driving device 50 so as to fluidly connect the motor-side first operation fluid passage 511 and the motor-side second operation fluid passage 512. In the right first wheel motor device 500R, the motor-side second operation fluid passage 512 becomes a high pressure and the motor-side first operation fluid passage 511 becomes a low pressure at the forward movement of the vehicle.

An orifice 802 that is set to have a predetermined throttling degree is inserted into the bypass fluid passage 810. The orifice 820 is provided at the motor-side port block 170 of the right first wheel motor device 500R.

A check valve 830 is also inserted in the bypass fluid passage 810. The check valve 830 is provided on a side closer to the motor-side first operation fluid passage 511 than the orifice 820 of the motor-side port block 170 so that pressurized fluid does not flow into the motor-side second operation fluid passage 512 from the motor-side first operation fluid passage 511 through the bypass fluid passage 810. The configuration allows pressurized fluid of an amount restricted by the orifice 820 to flow from the second operation fluid passage 512 to the first operation fluid passage 511 while preventing a reverse flow.

According to the configuration, a part of pressurized fluid in the first hydraulic line 311 is flown from the motor-side second operation fluid passage 512 to the motor-side first operation fluid passage 511 through the bypass fluid passage 810 at the right first wheel motor device 500R in accordance with increase of hydraulic pressure, in a case where a substantially large travelling load is applied to the working vehicle 1 for the reason of climbing up a slope or the like during the forward movement so that the hydraulic pressure of the first hydraulic line is continuously increased to be high.

As a result, a part of pressurized fluid in the first hydraulic line 311 bypasses the first hydraulic motor main body 120 of the first axle-driving device 50 and is then supplied to the second hydraulic line 321. The first hydraulic motor main bodies 120R, 120L of the right and left first wheel motor devices 500R, 500L are fluidly connected in parallel to the hydraulic pump main body 420 in the present embodiment, a part of pressurized fluid in the first hydraulic line 311 bypasses both the first hydraulic motor main bodies 120R, 120L.

Accordingly, it is suppressed that hydraulic pressure of the first hydraulic line 311 is continuously increased. Therefore, the first hydraulic line 311 can be prevented from having an excessively high pressure. Moreover, since a supply route of pressurized fluid into the second hydraulic line 321 and then the third hydraulic line 331 fluidly connected thereto is secured, shortage of pressurized fluid in the third hydraulic line 331 can be prevented.

Furthermore, in a case where a part of pressurized fluid in the first hydraulic line bypasses the first hydraulic motor main body 120 of the first axle-driving device 50, not only pressurized fluid that is discharged from the first hydraulic motor main body 120 of the first axle-driving device 50 but also pressurized fluid that bypasses the first hydraulic motor main body 120 through the bypass fluid passage 810 in which the orifice 820 is inserted drives the second hydraulic motor main body 620 of the second axle-driving device 60. Therefore, even in a case where a large travelling load is applied to the first driving wheels 21, four-wheel-drive mode can be effectively realized.

Since the check valve 830 is arranged in the bypass fluid passage 810, pressurized fluid does not flow from the motor-side first operation fluid passage 511 to the motor-side second operation fluid passage 512 through the bypass fluid passage 810 at the rearward movement of the vehicle. Accordingly, the first hydraulic motor main bodies 120R, 120L receive all of pressurized fluid that have flown in the second hydraulic line 321 so as to be efficiently driven.

In the present embodiment, the bypass fluid passage with the above-explained orifice is arranged only in the right first wheel motor device 500R. However, the bypass fluid passage with the orifice may be arranged in at least one of the right first wheel motor device 500R and the left first wheel motor device 500L, and therefore the present invention is not limited to the present embodiment.

Next, a hydraulic circuit of the second axle-driving device 60 will be explained.

The hydraulic circuit of the working vehicle can supply a part of pressurized fluid in the third hydraulic line 331 inclusive of the pump-side second operation fluid passage 442, which becomes a high pressure at the rearward movement of the vehicle, to the second hydraulic line 321 when the vehicle travels rearward, by causing the part of the pressurize fluid to bypass at least the second hydraulic motor main body 620, out of the first hydraulic motor main body 120 of the first wheel motor device 500 of the first axle-driving device 50 and the second hydraulic motor main body 620 of the second wheel motor device 600 of the second axle-driving device 60.

In the present embodiment, as shown in Fig. 8, the hydraulic circuit is configured to cause a part of pressurized fluid in the third hydraulic line to bypass only the second hydraulic motor main body 620 of the second wheel motor device 600 of the second axle-driving device 60 through a bypass fluid passage 910 so as to supply the part of pressurized fluid to the second hydraulic line (inclusive of the motor-side first operation fluid passage 511 of the right first wheel motor device 500R), that is, to the first hydraulic motor main body 120 of the first axle-driving device 50.

More specifically, the bypass fluid passage 910 is provided at the motor-side port block of the left second wheel motor device 600L in the second axle-driving device 60 so as to fluidly connect the motor-side first operation fluid passage 611 and the motor-side second operation fluid passage 612. In the left second wheel motor device 600L, the motor-side first operation fluid passage 611 becomes a high pressure and the motor-side second operation fluid passage 612 becomes a low pressure at the rearward movement of the vehicle.

An orifice 920 is inserted into the bypass fluid passage 910. The orifice 920 is provided at the motor-side port block of the left second wheel motor device 600L.

A check valve 930 is also inserted in the bypass fluid passage 910. The check valve 930 is provided at the motor-side port block of the left second wheel motor device 600L so that pressurized fluid does not flow into the motor-side first operation fluid passage 611 from the motor-side second operation fluid passage 612 through the bypass fluid passage 910.

According to the configuration, a part of pressurized fluid in the third hydraulic line is flown from the motor-side first operation fluid passage 611 to the motor-side second operation fluid passage 612 through the bypass fluid passage 910 in accordance with increase of hydraulic pressure in a case where a substantially large travelling load is applied to the working vehicle 1 for the reason of climbing up a slope or the like during the rearward movement so that the hydraulic pressure of the third hydraulic line is continuously increased to be high.

As a result, a part of pressurized fluid in the third hydraulic line bypasses the second hydraulic motor main body 620 of the second axle-driving device 60 and is then supplied to the second hydraulic line. The second hydraulic motor main bodies 620R, 620L of the right and left second wheel motor devices 600R, 600L are fluidly connected in parallel to the hydraulic pump main body 420 in the present embodiment, a part of pressurized fluid in the third hydraulic line bypasses both the second hydraulic motor main bodies 620R, 620L.

Accordingly, it is suppressed that hydraulic pressure of the third hydraulic line is continuously increased. Therefore, the third hydraulic line can be prevented from having an excessively high pressure. Moreover, since a supply route of pressurized fluid into the second hydraulic line 321 and then the first hydraulic line fluidly connected thereto is secured, shortage of pressurized fluid in the first hydraulic line can be prevented.

Furthermore, in a case where a part of pressurized fluid in the third hydraulic line bypasses the second hydraulic motor main body 120 of the second axle-driving device 60, not only pressurized fluid that is discharged from the second hydraulic motor main body 620 of the second axle-driving device 60 but also pressurized fluid that bypasses the second hydraulic motor main body 620 through the bypass fluid passage 910 in which the orifice 920 is inserted drives the first hydraulic motor main body 120 of the first axle-driving device 50. Therefore, even in a case where a large travelling load is applied to the second driving wheels 21, four-wheel-drive mode can be effectively realized.

Since the check valve 930 is arranged in the bypass fluid passage 910, pressurized fluid does not flow from the motor-side second operation fluid passage 612 to the motor-side first operation fluid passage 611 through the bypass fluid passage 910 at the forward movement of the vehicle. Accordingly, the second hydraulic motor main bodies 620R, 620L receive all of pressurized fluid that have flown in the second hydraulic line 321 so as to be efficiently driven.

In the present embodiment, the bypass fluid passage with the above-explained orifice is arranged only in the left second wheel motor device 600L. However, the bypass fluid passage with the orifice may be arranged in at least one of the right second wheel motor device 600R and the left second wheel motor device 600L, and therefore the present invention is not limited to the present embodiment.

Next, the speed-reduction gear unit 200 will be explained.

As shown in Figs. 4 and 5, the speed-reduction gear unit 200 includes the speed-reduction gear mechanism 210 and the speed-reduction gear case 250. The speed-reduction gear case 250 is detachably connected to the motor case 150 so as to form the gear space 300G that accommodates the speed-reduction gear mechanism 210.

In the present embodiment, the speed-reduction gear mechanism 210 includes first and second planetary gear mechanisms 220a, 220b connected in series to each other.

The motor case 150 is formed with a through-hole 155 (see Fig. 3) that allows one end (an outer end in the vehicle width direction in the present embodiment) of the motor shaft to be inserted into the gear space 300G. The speed-reduction gear mechanism 210 reduces a speed of rotational power outputted from the one end of the motor shaft 110, and transmits the rotational power whose speed has been reduced to the corresponding driving wheel 21 to drive the same.

As shown in Fig. 5, within the through-hole 155 is arranged a bearing member 115 that supports the motor shaft 110 in a rotatable manner around the axis line, and is also arranged an oil sealing member 116 that divides the motor space 300M and the gear space 300G in a liquid-tight manner to each other.

A second gear case 270 is formed into a hollow shape in which an inner end in the vehicle width direction that is brought into contact with a first gear case 260 is opened and an outer end in the vehicle width direction that is opposite from the first gear case 260 is closed by an end wall. The end wall of the second gear case 270 is formed with a though-hole 275 through which the output member 290 is inserted.

The output member 290 includes a flange portion 291 and an output shaft portion 292. The flange portion 291 is connected to an output portion of the second planetary gear mechanism 220b so that a rotational power that has been transmitted through the first planetary gear mechanism 220a and outputted from the second planetary gear mechanism 220b is transmitted to the flange portion 291. The output shaft portion 292 extends outward in the vehicle width direction from the flange portion 291.

In the present embodiment, the first wheel motor device 500 is further provided with a brake unit 310. The brake unit 310 is configured so as to apply a braking power to the motor shaft 110 that is positioned on an upstream side from the speed-reduction gear mechanism 210 reducing the speed of the rotational power.

Next, other configurations of the first and second axle-driving devices 50, 60 will be explained.

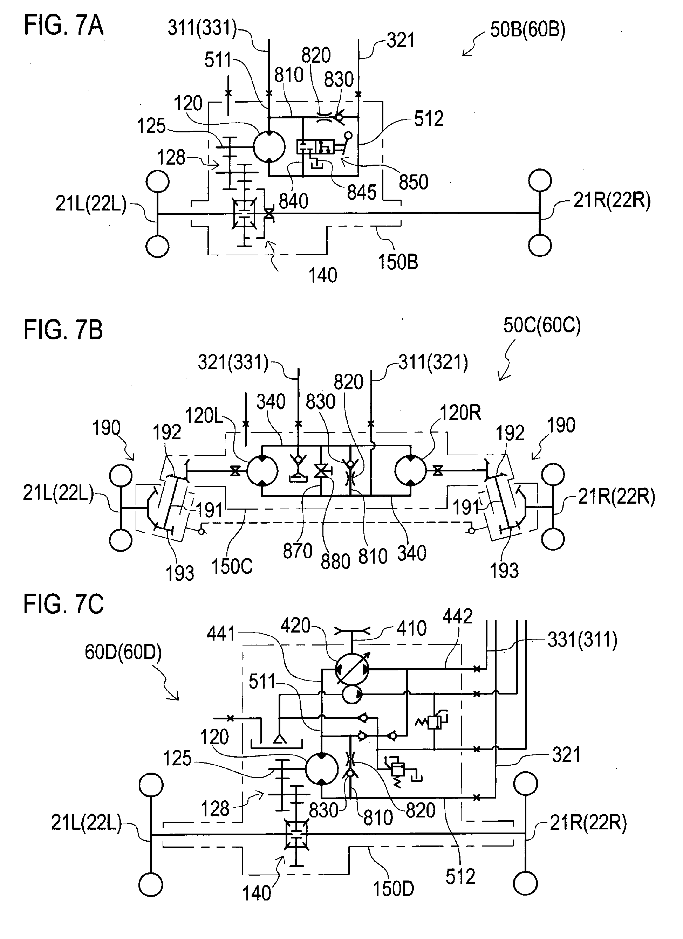

The first and second can take various configurations other than the present embodiment. For example, the first axle-driving device 50 can be embodied by any one of configurations shown in Figs. 7A, 7B and 7C. The second axle-driving devices 60 can be also embodied by any one of the configurations shown in Figs. 7A, 7B and 7C. However, there is no possibility that both the first and second axle-driving devices 50, 60 are embodied by the configuration shown in Fig. 7C. Next, the other configurations will be explained. In Figs. 7A-7C, the same components as those in the present embodiment are denoted by the same reference characters.

An axle-driving device 50B (60B) that is shown in Fig. 7A and can be applied as either the first axle-driving device 50 or the second axle-driving device 60 is configured so as to drive the right and left driving wheels 21R, 21L (22R, 22L) in a differential manner to each other by a mechanical differential gear mechanism (mechanical differential device) 140.

More specifically, the single hydraulic motor main body 120, a motor shaft 125, a speed-reduction gear mechanism 128, the mechanical differential gear mechanism 140 and a motor case 150B are provided.

The hydraulic motor main body 120 is fluidly connected to the hydraulic pump main body 420 in a direct or indirect manner. The motor shaft 125 is a member for outputting rotational power of the hydraulic motor main body. The speed-reduction gear mechanism 128 is configured so as to reduce speed of the rotational power outputted from the motor shaft 125.

The mechanical differential gear mechanism 140 is configured so as to transmit the rotational power whose speed has been reduced by the speed-reduction gear mechanism 128 to the pair of right and left driving wheels 21R, 21L (22R, 22L) in a differential manner to each other. The motor case 150B accommodates the hydraulic motor main body 120, the motor shaft 125, the speed-reduction gear mechanism 128 and the differential gear mechanism 140.

As shown in Fig. 7A, the motor case 150B is provided with the pair of motor-side first operation fluid passage 511 and motor-side second operation fluid passage 512 that are fluidly connected to the hydraulic motor main body 120. One of the motor-side first and second operation fluid passages 511, 512 becomes a high-pressure side at the forward movement of the vehicle, and the other becomes a high-pressure side at the rearward movement of the vehicle.

To the motor-side first operation fluid passage 511 is connected the first hydraulic line 311 (the third hydraulic line 331). To the motor-side second operation fluid passage 512 is connected the second hydraulic line 321.

As shown in Fig. 7A, the axle-driving device 50B (60B) is further provided with the bypass fluid passage 810 that fluidly connects the motor-side first and second operation fluid passages 511, 512. The bypass fluid passage 810 is provided with the orifice 820 and the check valve 830.

At the time when the vehicle travels forward, a part of pressurized fluid in the motor-side first operation fluid passage 511 and the first hydraulic line flows from the high-pressure motor-side first operation fluid passage 511 to the low-pressure motor-side second operation fluid passage 512 through the bypass fluid passage 810 with the orifice 820 being inserted therein so as to bypass the hydraulic motor main body 120 in accordance with increase of the hydraulic pressure of the first hydraulic line. The check valve 830 prevents the pressurized fluid from being flown from the motor-side second operation fluid passage 512 to the first operation fluid passage 511.

To the bypass passage 810 is also connected a branch fluid passage 840. The branch fluid passage 840 is branched from the bypass fluid passage 810 on an upstream side from the orifice 820 and the check valve 830 with respect to a hydraulic flow direction at the forward movement of the vehicle, and is connected to the motor-side second operation fluid passage 512. A switching valve 850 is interposed into the branch fluid passage 840. A drain fluid passage 845 that is fluidly connected to a motor space of the motor case 150B can be connected to the branch fluid passage 840 by the switching valve 850.

The switching valve 850 can take a shutoff position that causes the branch fluid passage 840 to be in a shutoff state or a connection position that causes the branch fluid passage 840 to be in a connection state in accordance with external operation. The switching valve 850 fluidly disconnect the drain fluid passage 845 from the branch fluid passage 840 when being positioned at the shutoff position, and fluidly connects the drain fluid passage 845 to the branch fluid passage 840 when being positioned at the connection position.

In an axle-driving device 50C (60C) shown in Fig. 7B, the right and left hydraulic motor main bodies 120R, 120L are integrally accommodated in a motor case 150C.

More specifically, the first axle-driving device 50C (60C) includes the right hydraulic motor main body 120R, the left hydraulic motor main body 120L and the motor case 150C. The right and left hydraulic motor main bodies 120R, 120L are fluidly connected to each other so as to form a closed circuit through a pair of motor-side operation fluid lines 340. The motor case 150C accommodates the pair of hydraulic motor main bodies 120R, 120L.

To one of the pair of motor-side operation fluid passages 340 that becomes a high-pressure side at the forward movement of the vehicle is fluidly connected the first hydraulic line 311 (second hydraulic line 321). To the other one of the pair of motor-side operation fluid passages 340 that becomes a high-pressure side at the rearward movement of the vehicle is fluidly connected the second hydraulic line 321 (third hydraulic line 331).

The first axle-driving device 50C (60C) is further provided with a pair of speed-reduction gear units 190 on both sides of the motor case 150C in the vehicle width direction. The speed-reduction gear unit 190 includes a kingpin shaft 191, a first speed-reduction bevel gear 192 and a second speed-reduction bevel gear 193.

The kingpin shaft 191 is arranged so as to be along a vertical direction. The first speed-reduction bevel gear 192 is arranged on an upper end side of the kingpin shaft 191 in a relatively non-rotatable manner with respect thereto and is operatively connected to the first hydraulic motor main body 120. The second speed-reduction bevel gear 193 is arranged on an lower end side of the kingpin shaft 191, and is operatively connected to the corresponding driving wheel 21 (22). The speed-reduction unit 190 supports the corresponding driving wheel 21 (22) in a steerable manner around the kingpin shaft 191.

Furthermore, as shown in Fig. 7B, the first axle-driving device 50C (60C) is provided with the bypass fluid passage 810 that fluidly connects the pair of motor-side operation fluid passages 340. The bypass fluid passage 810 is provided with the orifice 820 and the check valve 830.

When the vehicle travels forward, pressurized fluid flows from one motor-side operation fluid passage out of the pair of motor-side operation fluid passages 340 that becomes a high-pressure side to the other one motor-side operation fluid passage through the bypass fluid passage 810 with the orifice 820 being inserted therein so as to bypass the right and left hydraulic motor main bodies 120R, 120L. The check valve 830 prevents pressurized fluid from being flown from the other one motor-side operation fluid passage out of the pair of motor-side operation fluid passages 340 that become a high-pressure side at the rearward movement of the vehicle to the one motor-side operation fluid passage.

Furthermore, as shown in Fig. 7B, the axle-driving device 50C (60C) may be provided with another bypass fluid passage 870 that fluidly connects the pair of first motor-side operation fluid passages 340 and a bypass valve 880 that causes the bypass fluid passage 870 to be selectively in a connection state or a shutoff state in accordance with an operation from outside.

In an axle-driving device 50D (60D) shown in Fig. 7C, a motor case 150D is formed so as to also function as a pump case, and the hydraulic pump 420 and the hydraulic motor 120 are integrally accommodated in the motor case 150D. The axle-driving device 50D (60D) is configured so as to drive the right and left first driving wheels 21R, 21L in a differential manner to each other through the mechanical differential gear mechanism (mechanical differential device) 140.

More specifically, the axle-driving device 50D (60D) includes the single hydraulic motor main body 120, the motor shaft 125, the speed-reduction gear mechanism 128, the mechanical differential gear mechanism 140 and the motor case 150D.

The hydraulic motor main body 120 is fluidly connected to the hydraulic pump main body 420 in a direct or indirect manner. The motor shaft 125 is a member for outputting rotational power of the hydraulic motor main body. The speed-reduction gear mechanism 128 is configured so as to reduce speed of the rotational power outputted from the motor shaft 125.

The mechanical differential gear mechanism 140 is configured so as to transmit the rotational power whose speed has been reduced by the speed-reduction gear mechanism 128 to the pair of right and left driving wheels 21R, 21L (22R, 22L) in a differential manner to each other. The motor case 150D accommodates the hydraulic pump main body 420, the hydraulic motor main body 120, the motor shaft 125, the speed-reduction gear mechanism 128 and the differential gear mechanism 140.

The motor case 150D is provided with the pair of motor-side first operation fluid passage 511 and motor-side second operation fluid passage 512 that are fluidly connected to the hydraulic motor main body 120. One of the motor-side first and second operation fluid passages 511, 512 becomes a high-pressure side at the forward movement of the vehicle, and the other becomes a high-pressure side at the rearward movement of the vehicle.

The motor-side first operation fluid passage 511 is fluidly connected to the third hydraulic line 331 (first hydraulic line 311). The motor-side second operation fluid passage 512 is fluidly connected to the second hydraulic line 321.

As shown in Fig. 7C, the first axle-driving device 50D (60D) is further provided with the bypass fluid passage 810 that fluidly connects the motor-side first and second operation fluid passages 511, 512. The bypass fluid passage 810 is provided with the orifice 820 and the check valve 830.

At the time when the vehicle travels forward, a part of pressurized fluid in the motor-side first operation fluid passage 511 and the first hydraulic line flows from the high-pressure motor-side first operation fluid passage 511 to the low-pressure motor-side second operation fluid passage 512 through the bypass fluid passage 810 with the orifice 820 being inserted therein so as to bypass the hydraulic motor main body 120 in accordance with increase of the hydraulic pressure of the first hydraulic line. The check valve 830 prevents the pressurized fluid from being flown from the motor-side second operation fluid passage 512 to the first operation fluid passage 511.

Also in any one of the axle-driving devices of the three types, when a substantially large travelling load is applied to the first driving wheels 21 for the reason of climbing up a slope or the like during the forward movement of the vehicle, a part of pressurized fluid in the first hydraulic line 311 bypasses the first hydraulic motor main body 120 of the first axle-driving device 50 in accordance with increase of hydraulic pressure of the first hydraulic line 311, by the bypass fluid passage 810 with the orifice 820 being inserted therein, to be supplied to the third hydraulic line 331. Accordingly, it is suppressed that hydraulic pressure of the first hydraulic line 311 is continuously increased, whereby the first hydraulic line 311 can be prevented from having an excessively high pressure. At the same time, shortage of pressurized fluid in the third hydraulic line 331 can be effectively prevented. As a result, the travel stability of the working vehicle 1 can be improved.

In the hydraulic four-wheel-drive working vehicle 1 according to the present embodiment, the bypass fluid passage 810 that is a first bypass line fluidly connects the first hydraulic line 311 to the second hydraulic line 321. That is, in the present embodiment, the first bypass line is configured so as to supply the pressurized fluid which has bypassed to the third hydraulic line 331 through the second hydraulic line 321.

The configuration makes it possible to drive the second hydraulic motor main body 620, which is positioned on a downstream side from the first hydraulic motor main body 120 with respect to a flow direction of pressurized fluid, by pressurized fluid discharged from the first hydraulic motor main body 120 of the first axle-driving device 50 as well as pressurized fluid bypassing the first hydraulic motor main body 120, when a substantially large load is applied to the first driving wheels 21 at the forward movement of the vehicle. Therefore, in addition to the above-explained effects, four-wheel-drive mode can be effectively realized even in a case where a large travelling load is applied to the first driving wheels 21.

In the hydraulic four-wheel-drive working vehicle 1 according to the present embodiment, the third hydraulic line 331 sends pressurized fluid, which has been discharged from the hydraulic pump main body 420, to the second hydraulic motor main body 620 of the second axle-driving device 60 when the vehicle travels rearward. The second hydraulic line 321 sends pressurized fluid, which has been discharged from the second hydraulic motor main body 620 of the second axle-driving device 60, to the first hydraulic motor main body 120 of the first axle-driving device 50 when the vehicle travels rearward. The first hydraulic line 311 sends pressurized fluid, which has been discharged from the first hydraulic motor main body 120 of the first axle-driving device 50, to the hydraulic pump main body 420 when the vehicle travels rearward.

The closed circuit is provided with the bypass fluid passage 910 functioning as a second bypass line that causes pressurized fluid in the third hydraulic line 331 to bypass the second hydraulic motor main body 620 of the second axle-driving device 60 to send the same to the second hydraulic line 321. A second orifice 920 is inserted in the bypass fluid passage 910.

According to the configuration, a part of pressurized fluid in the third hydraulic line 331 bypasses the second hydraulic motor main body 620 of the second axle-driving device 60 to be supplied to the second hydraulic line 321 in accordance with increase of hydraulic pressure in the third hydraulic line 331 through the bypass fluid passage 910 with the orifice 920 being inserted therein, in a case where a substantially large travelling load is applied to the second driving wheels 22 for the reason of climbing up a slope or the like during the rearward movement of the vehicle. Accordingly, it is suppressed that hydraulic pressure of the third hydraulic line 331 is continuously increased, whereby the third hydraulic line 331 can be prevented from having an excessively high pressure. At the same time, the configuration can effectively prevent shortage of pressurized fluid in the second hydraulic line 321. As a result, the travel stability of the working vehicle 1 can be improved.

The configuration makes it possible to drive the first hydraulic motor main body 120, which is positioned on a downstream side from the second hydraulic motor main body 620 with respect to a flow direction of pressurized fluid, by pressurized fluid discharged from the second hydraulic motor main body 620 of the second axle-driving device 60 as well as pressurized fluid bypassing the second hydraulic motor main body 620, when a substantially large load is applied to the second driving wheels 22 at the rearward movement of the vehicle. Therefore, in addition to the above-explained effects, four-wheel-drive mode can be effectively realized even in a case where a large travelling load is applied to the second driving wheels 22.

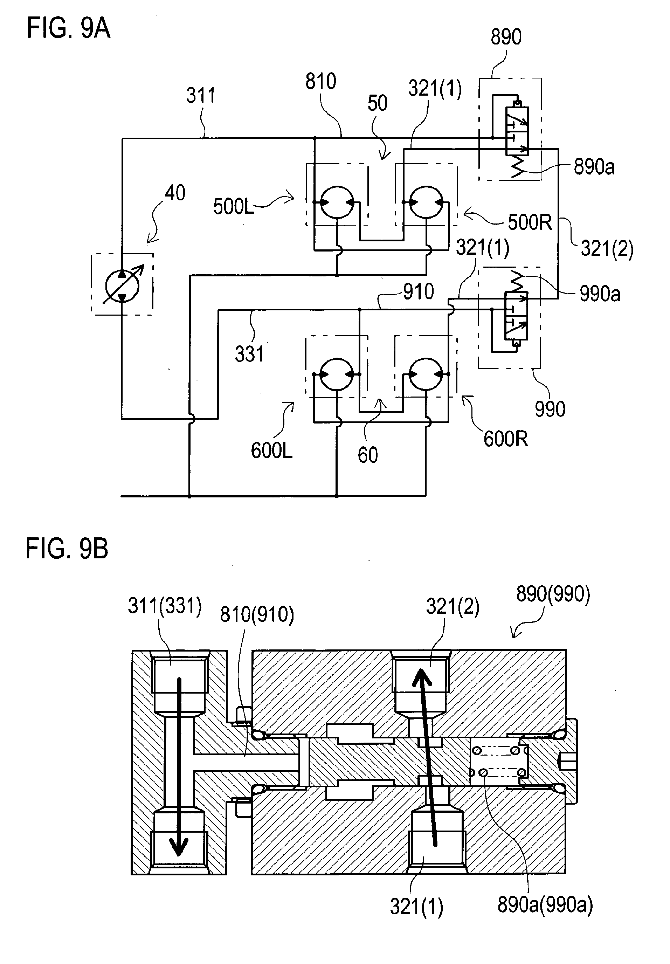

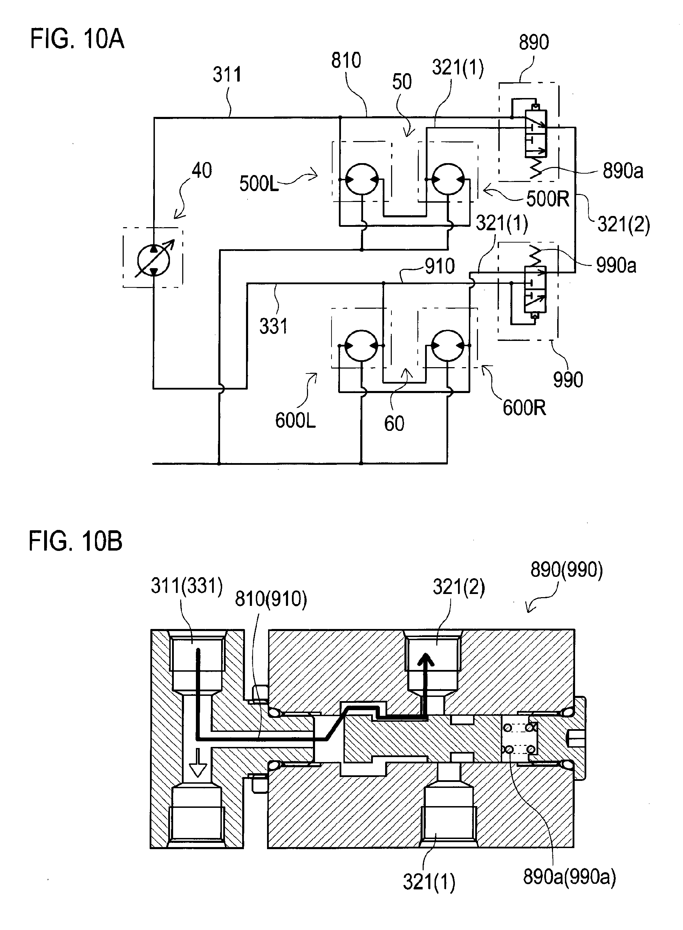

In the hydraulic four-wheel-drive working vehicle 1 according to the present embodiment, as shown in Figs. 9A, 9B, 10A, 10B, a pressure-sensing switching valve 890 in place of the orifice 820 can be inserted in the bypass fluid passage 810. In the same way, a pressure-sensing switching valve 990 in place of the orifice 920 can be inserted in the bypass fluid passage 910.

In this case, the switching valve 890 is arranged at a halfway position of the second hydraulic line 321. The switching valve 890 is shifted to an opened state when the hydraulic pressure of the first hydraulic line 311 is higher than or equal to a threshold value (a pressure corresponding to a biasing force by a spring 890a). The switching valve 890 fluidly disconnects the first hydraulic line 311 from the second hydraulic line 321 when being in a closed state, and flow pressurized fluid in the first hydraulic line 311 to the second hydraulic line 321 through the bypass fluid passage 810 when being in the opened state. The switching valve 890 is arranged integrally with or separately from the first wheel motor device 500.

The switching valve 990 is shifted to an opened state when the hydraulic pressure of the third hydraulic line 331 is higher than or equal to a threshold value (a pressure corresponding to a biasing force by a spring 990a). The switching valve 990 fluidly disconnects the third hydraulic line 331 from the second hydraulic line 321 when being in a closed state, and flow pressurized fluid in the third hydraulic line 331 to the second hydraulic line 321 through the bypass fluid passage 910 when being in the opened state. The switching valve 990 is arranged integrally with or separately from the second wheel motor device 600.

The switching valve 890 is in the closed state to fluidly disconnect the second hydraulic line 321 from the first hydraulic line 311 when the first hydraulic line has a hydraulic pressure less than the threshold value at the forward movement of the vehicle. Accordingly, the pressurized fluid in the first hydraulic line 311 is supplied to the first hydraulic motor main body 120 of the first wheel motor device of the first axle-driving device 50. On this occasion, the pressurized fluid which has driven the first hydraulic motor main body 120 flow an upstream side (321(1)) of the second hydraulic line 321 to a downstream side (321(2)) through the switching valve 890 as indicated by a black arrow of Fig. 9B.

The switching valve 890 is shifted to the opened state to fluidly connect the second hydraulic line 321 to the first hydraulic line 311 as shown in Figs. 10A, 10B, when the substantially large travel load is applied to the first driving wheels 21 for the reason of climbing up a slope or the like during the forward movement of the working vehicle 1 so that the first hydraulic line 311 has the hydraulic pressure higher than or equal to the threshold value. Accordingly, a part of pressurized fluid in the first hydraulic line 311 flows from the first hydraulic line 311 to the second hydraulic line 321 (321(2)) through the bypass fluid passage 810 so as to bypass the first hydraulic motor main body 120 of the first wheel motor device as indicated by a black arrow of Fig. 10B. When the working vehicle 1 travels forward, the switching valve 990 is always kept to be in the closed state so that all of the pressurized fluid flown in the second hydraulic line is supplied to the second hydraulic motor main body 620.

As shown in Figs. 9A, 9B, the switching valve 990 is in the closed state to fluidly disconnect the second hydraulic line 321 from the third hydraulic line 331 when the third hydraulic line has a hydraulic pressure less than the threshold value at the rearward movement of the vehicle. Accordingly, the pressurized fluid in the third hydraulic line 331 is supplied to the second hydraulic motor main body 620 of the second wheel motor device 600 of the second axle-driving device 60. On this occasion, the pressurized fluid which has driven the second hydraulic motor main body 620 flow an upstream side (321(1)) of the second hydraulic line 321 to a downstream side (321(2)) through the switching valve 990 as indicated by a black arrow of Fig. 9B.

The switching valve 990 is shifted to the opened state to fluidly connect the second hydraulic line 321 to the third hydraulic line 331 as shown in Figs. 10A, 10B, when the substantially large travel load is applied to the second driving wheels 22 for the reason of climbing up a slope or the like during the rearward movement of the working vehicle 1 so that the third hydraulic line 331 has the hydraulic pressure higher than or equal to the threshold value. Accordingly, a part of pressurized fluid in the third hydraulic line 331 flows from the third hydraulic line 331 to the second hydraulic line 321 (321(2)) through the bypass fluid passage 910 so as to bypass the second hydraulic motor main body 620 of the second wheel motor device 600 as indicated by a black arrow of Fig. 10B. When the working vehicle 1 travels rearward, the switching valve 890 is always kept to be in the closed state so that all of the pressurized fluid flown in the second hydraulic line is supplied to the first hydraulic motor main body 120.

As explained earlier, if the hydraulic pressure of the first hydraulic line 311 is increased due to travel load, the switching valve 890 can cause a part of pressurized fluid in the first hydraulic line 311 to bypass the first hydraulic motor main body 120 of the first wheel motor device 500. If the hydraulic pressure of the third hydraulic line 331 is increased due to travel load, the switching valve 990 can cause a part of pressurized fluid in the third hydraulic line 311 to bypass the second hydraulic motor main body 620 of the second wheel motor device 600. Therefore, in a case where the switching valves 890, 990 are inserted into the bypass fluid passages 810, 910, the same effects can be realized as in a case where the orifices 820, 920 are inserted into the bypass fluid passages 810, 910.

## Claims

1. A hydraulic four-wheel-drive working vehicle (1) comprising at least one hydraulic pump (420) operatively driven by a driving power source (30), a first hydraulic motor unit (100) including at least one hydraulic motor (120) that drives a pair of right and left first wheels (21 R, 21 L) arranged on one side in a vehicle longitudinal direction, and a second hydraulic motor unit (100E) including at least one hydraulic motor (620) that drives a pair of right and left second wheels (22R, 22L) arranged on the other side in the vehicle longitudinal direction, wherein at least one of the hydraulic pump and a group of the hydraulic motors of the first and second hydraulic motor units is of a variable displacement type, and wherein the hydraulic pump, the hydraulic motor of the first hydraulic motor unit and the hydraulic motor of the second hydraulic motor unit are fluidly connected in series to one another to form a closed circuit, the hydraulic four-wheel-drive working vehicle being **characterized in that**,
the closed circuit includes a first hydraulic line (311) for sending pressurized fluid that has been discharged from the hydraulic pump to the hydraulic motor of the first hydraulic motor unit at a forward movement of the vehicle, a second hydraulic line (321) for sending pressurized fluid that has been discharged from the hydraulic motor of the first hydraulic motor unit to the hydraulic motor of the second hydraulic motor unit at the forward movement of the vehicle, and a third hydraulic line (331) for sending pressurized fluid that has been discharged from the hydraulic motor of the second hydraulic motor unit to the hydraulic pump at the forward movement of the vehicle, and
the closed circuit further includes a first bypass line (810) that causes at least a part of pressurized fluid in the first hydraulic line to bypass the hydraulic motor of the first hydraulic motor unit to be supplied to the second hydraulic line, and an orifice (820) inserted in the first bypass line so that the first bypass line is constantly opened with being throttled at a predetermined degree.

2. The hydraulic four-wheel-drive working vehicle according to claim 1, wherein the first bypass line has a check valve (830) that prevents pressurized fluid from being flown from the second hydraulic line to the first hydraulic line.

3. The hydraulic four-wheel-drive working vehicle according to claim 1 or 2, wherein the closed circuit further includes a second bypass line (910) that causes at least a part of pressurized fluid in the third hydraulic line to bypass the hydraulic motor of the second hydraulic motor unit to be supplied to the second hydraulic line, the second bypass line having an orifice (920) and a check valve (930) that are inserted therein, the check valve preventing pressurized fluid from being flown from the second hydraulic line to the third hydraulic line.

4. The hydraulic four-wheel-drive working vehicle according to any one of claims 1 to 3, wherein at least one of the first and second hydraulic motor units includes a pair of right and left wheel motor devices (500R, 500L; 600R, 600L),
wherein each of the pair of wheel motor devices includes the hydraulic motor that drives the corresponding wheel, and
wherein the hydraulic motors of the pair of wheel motor devices are fluidly connected in parallel to the hydraulic pump.

5. The hydraulic four-wheel-drive working vehicle according claim 4, wherein each of the pair of right and left wheel motor devices includes the hydraulic motor and a port block that is formed with a pair of supply and discharge fluid passages for the hydraulic motor, and
wherein the corresponding orifice is mounted to at least one of the port blocks of the pair of right and left wheel motor devices.

6. The hydraulic four-wheel-drive working vehicle according to any one of claims 1 to 3, wherein at least one of the first and second hydraulic motor units includes the single hydraulic motor, and a mechanical differential device (140) that transmits rotational power from the single hydraulic motor to the corresponding pair of right and left wheels in a differential manner to each other.

7. A hydraulic four-wheel-drive working vehicle (1) comprising at least one hydraulic pump (420) operatively driven by a driving power source (30), a first hydraulic motor unit (100) including at least one hydraulic motor (120) that drives a pair of right and left first wheels (21 R, 21 L) arranged on one side in a vehicle longitudinal direction, and a second hydraulic motor unit (100E) including at least one hydraulic motor (620) that drives a pair of right and left second wheels (22R, 22L) arranged on the other side in the vehicle longitudinal direction, wherein at least one of the hydraulic pump and a group of the hydraulic motors of the first and second hydraulic motor units is of a variable displacement type, and wherein the hydraulic pump, the hydraulic motor of the first hydraulic motor unit and the hydraulic motor of the second hydraulic motor unit are fluidly connected in series to one another to form a closed circuit, the hydraulic four-wheel-drive working vehicle being **characterized in that**,
the closed circuit includes a first hydraulic line (311) for sending pressurized fluid that has been discharged from the hydraulic pump to the hydraulic motor of the first hydraulic motor unit at a forward movement of the vehicle, a second hydraulic line (321) for sending pressurized fluid that has been discharged from the hydraulic motor of the first hydraulic motor unit to the hydraulic motor of the second hydraulic motor unit at the forward movement of the vehicle, and a third hydraulic line (331) for sending pressurized fluid that has been discharged from the hydraulic motor of the second hydraulic motor unit to the hydraulic pump at the forward movement of the vehicle,
the closed circuit further includes a first bypass line (810) that causes at least a part of pressurized fluid in the first hydraulic line to bypass the hydraulic motor of the first hydraulic motor unit to be supplied to the second hydraulic line, and
a switching valve (890) that is inserted in the first bypass line, and
the switching valve is shifted to an opened state when a hydraulic pressure of the first hydraulic line becomes higher than or equal to a threshold value so that at least part of pressurized fluid in the first hydraulic line bypasses the hydraulic motor of the first hydraulic motor unit to be supplied to the second hydraulic line.

## Patentansprüche

1. Hydraulisches vierradgetriebenes Arbeitsfahrzeug (1), das Folgendes umfasst: mindestens eine Hydraulikpumpe (420), die durch eine Antriebskraftquelle (30) angetrieben wird, eine erste Hydraulikmotoreinheit (100), die mindestens einen Hydraulikmotor (120) umfasst, der ein Paar rechter und linker erster Räder (21R, 21L) antreibt, die auf einer Seite in einer Fahrzeuglängsrichtung angeordnet sind, und eine zweite Hydraulikmotoreinheit (100E), die mindestens einen Hydraulikmotor (620) umfasst, der ein Paar rechter und linker zweiter Räder (22R, 22L) antreibt, die auf der anderen Seite in der Fahrzeuglängsrichtung angeordnet sind, wobei die Hydraulikpumpe und/oder eine Gruppe der Hydraulikmotoren der ersten und zweiten Hydraulikmotoreinheiten vom Verstelltyp sind, und wobei die Hydraulikpumpe, der Hydraulikmotor der ersten Hydraulikmotoreinheit und der Hydraulikmotor der zweiten Hydraulikmotoreinheit strömungstechnisch hintereinander in einem geschlossenen Kreis miteinander verbunden sind, wobei das hydraulische vierradgetriebene Arbeitsfahrzeug **dadurch gekennzeichnet ist, dass**:
der geschlossene Kreis Folgendes umfasst: eine erste Hydraulikleitung (311), um druckbeaufschlagtes Fluid, das aus der Hydraulikpumpe abgelassen wurde, zu dem Hydraulikmotor der ersten Hydraulikmotoreinheit bei einer Vorwärtsbewegung des Fahrzeugs zu leiten, eine zweite Hydraulikleitung (321), um druckbeaufschlagtes Fluid, das aus dem Hydraulikmotor der ersten Hydraulikmotoreinheit abgelassen wurde, zu dem Hydraulikmotor der zweiten Hydraulikmotoreinheit bei der Vorwärtsbewegung des Fahrzeugs zu leiten, und eine dritte Hydraulikleitung (331), um druckbeaufschlagtes Fluid, das aus dem Hydraulikmotor der zweiten Hydraulikmotoreinheit abgelassen wurde, zu der Hydraulikpumpe bei der Vorwärtsbewegung des Fahrzeugs zu leiten, und
der geschlossene Kreis des Weiteren Folgendes umfasst: eine erste Umgehungsleitung (810), die mindestens einen Teil des druckbeaufschlagten Fluids in der ersten Hydraulikleitung veranlasst, den Hydraulikmotor der ersten Hydraulikmotoreinheit zu umgehen, um zu der zweiten Hydraulikleitung geleitet zu werden, und eine Öffnung (820), die so in die erste Umgehungsleitung eingesetzt ist, dass die erste Umgehungsleitung dauerhaft geöffnet ist und dabei auf einen zuvor festgelegten Grad gedrosselt wird.

2. Hydraulisches vierradgetriebenes Arbeitsfahrzeug nach Anspruch 1, wobei die erste Umgehungsleitung ein Rückschlagventil (830) hat, das verhindert, dass druckbeaufschlagtes Fluid von der zweiten Hydraulikleitung zu der ersten Hydraulikleitung fließt.

3. Hydraulisches vierradgetriebenes Arbeitsfahrzeug nach Anspruch 1 oder 2, wobei der geschlossene Kreis des Weiteren eine zweite Umgehungsleitung (910) umfasst, die mindestens einen Teil des druckbeaufschlagten Fluids in der dritten Hydraulikleitung veranlasst, den Hydraulikmotor der zweiten Hydraulikmotoreinheit zu umgehen, um zu der zweiten Hydraulikleitung geleitet zu werden, wobei die zweite Umgehungsleitung eine Öffnung (920) und ein Rückschlagventil (930) aufweist, die in sie eingesetzt sind, wobei das Rückschlagventil verhindert, dass druckbeaufschlagtes Fluid aus der zweiten Hydraulikleitung zu der dritten Hydraulikleitung fließt.

4. Hydraulisches vierradgetriebenes Arbeitsfahrzeug nach einem der Ansprüche 1 bis 3, wobei mindestens eine der ersten und zweiten Hydraulikmotoreinheiten ein Paar rechter und linker Radmotorvorrichtungen (500R, 500L; 600R, 600L) umfasst,
wobei jede des Paares von Radmotorvorrichtungen den Hydraulikmotor umfasst, der das entsprechende Rad antreibt, und
wobei die Hydraulikmotoren des Paares von Radmotorvorrichtungen strömungstechnisch parallel zu der Hydraulikpumpe verbunden sind.

5. Hydraulisches vierradgetriebenes Arbeitsfahrzeug nach Anspruch 4, wobei jede des Paares rechter und linker Radmotorvorrichtungen den Hydraulikmotor und einen Portblock umfasst, der mit einem Paar Zufluss- und Abfluss-Fluiddurchgängen für den Hydraulikmotor ausgebildet ist, und
wobei die entsprechende Öffnung an mindestens einem der Portblöcke des Paares rechter und linker Radmotorvorrichtungen montiert ist.

6. Hydraulisches vierradgetriebenes Arbeitsfahrzeug nach einem der Ansprüche 1 bis 3, wobei mindestens eine der ersten und zweiten Hydraulikmotoreinheiten den einzelnen Hydraulikmotor und eine mechanische Differenzialvorrichtung (140) umfasst, die eine Drehkraft von dem einzelnen Hydraulikmotor zu dem entsprechenden Paar rechter und linker Räder in einer zueinander differenziellen Weise überträgt.

7. Hydraulisches vierradgetriebenes Arbeitsfahrzeug (1), das Folgendes umfasst: mindestens eine Hydraulikpumpe (420), die durch eine Antriebskraftquelle (30) angetrieben wird, eine erste Hydraulikmotoreinheit (100), die mindestens einen Hydraulikmotor (120) umfasst, der ein Paar rechter und linker erster Räder (21R, 21L) antreibt, die auf einer Seite in einer Fahrzeuglängsrichtung angeordnet sind, und eine zweite Hydraulikmotoreinheit (100E), die mindestens einen Hydraulikmotor (620) umfasst, der ein Paar rechter und linker zweiter Räder (22R, 22L) antreibt, die auf der anderen Seite in der Fahrzeuglängsrichtung angeordnet sind, wobei die Hydraulikpumpe und/oder eine Gruppe der Hydraulikmotoren der ersten und zweiten Hydraulikmotoreinheiten vom Verstelltyp sind, und wobei die Hydraulikpumpe, der Hydraulikmotor der ersten Hydraulikmotoreinheit und der Hydraulikmotor der zweiten Hydraulikmotoreinheit strömungstechnisch hintereinander in einem geschlossenen Kreis miteinander verbunden sind, wobei das hydraulische vierradgetriebene Arbeitsfahrzeug **dadurch gekennzeichnet ist, dass**:
der geschlossene Kreis Folgendes umfasst: eine erste Hydraulikleitung (311), um druckbeaufschlagtes Fluid, das aus der Hydraulikpumpe abgelassen wurde, an den Hydraulikmotor der ersten Hydraulikmotoreinheit bei einer Vorwärtsbewegung des Fahrzeugs zu leiten, eine zweite Hydraulikleitung (321), um druckbeaufschlagtes Fluid, das aus dem Hydraulikmotor der ersten Hydraulikmotoreinheit abgelassen wurde, an den Hydraulikmotor der zweiten Hydraulikmotoreinheit bei der Vorwärtsbewegung des Fahrzeugs zu leiten, und eine dritte Hydraulikleitung (331), um druckbeaufschlagtes Fluid, das aus dem Hydraulikmotor der zweiten Hydraulikmotoreinheit abgelassen wurde, zu der Hydraulikpumpe bei der Vorwärtsbewegung des Fahrzeugs zu leiten,
wobei der geschlossene Kreis des Weiteren Folgendes umfasst: eine erste Umgehungsleitung (810), die mindestens einen Teil des druckbeaufschlagten Fluids in der ersten Hydraulikleitung veranlasst, den Hydraulikmotor der ersten Hydraulikmotoreinheit zu umgehen, um zu der zweiten Hydraulikleitung geleitet zu werden, und ein Schaltventil (890), das in die erste Umgehungsleitung eingesetzt ist, und
das Schaltventil in einen geöffneten Zustand verschoben wird, wenn ein Hydraulikdruck der ersten Hydraulikleitung mindestens so groß wird wie ein Schwellenwert, so dass mindestens ein Teil des druckbeaufschlagten Fluids in der ersten Hydraulikleitung den Hydraulikmotor der ersten Hydraulikmotoreinheit umgeht, um zu der zweiten Hydraulikleitung geleitet zu werden.

## Revendications

1. Véhicule de travail hydraulique à quatre roues motrices (1) comprenant au moins une pompe hydraulique (420) entraînée fonctionnellement par une source de puissance d'entraînement (30), une première unité de moteur hydraulique (100) comprenant au moins un moteur hydraulique (120) qui entraîne une paire de premières roues droite et gauche (21R, 21L) agencées sur un côté dans une direction longitudinale du véhicule, et une seconde unité de moteur hydraulique (100E) comprenant au moins un moteur hydraulique (620) qui entraîne une paire de secondes roues droite et gauche (22R, 22L) agencées de l'autre côté dans la direction longitudinale du véhicule, dans lequel au moins l'un de la pompe hydraulique et d'un groupe des moteurs hydrauliques des première et seconde unités de moteur hydraulique est d'un type à cylindrée variable, et dans lequel la pompe hydraulique, le moteur hydraulique de la première unité de moteur hydraulique et le moteur hydraulique de la seconde unité de moteur hydraulique sont reliés de manière fluidique en série les uns aux autres pour former un circuit fermé, le véhicule de travail hydraulique à quatre roues motrices étant **caractérisé en ce que**,
le circuit fermé comprend une première conduite hydraulique (311) pour envoyer un fluide sous pression qui a été évacué à partir de la pompe hydraulique au moteur hydraulique de la première unité de moteur hydraulique lors d'un déplacement vers l'avant du véhicule, une deuxième conduite hydraulique (321) pour envoyer un fluide sous pression qui a été déchargé à partir du moteur hydraulique de la première unité de moteur hydraulique au moteur hydraulique de la seconde unité de moteur hydraulique lors du déplacement vers l'avant du véhicule, et une troisième conduite hydraulique (331) pour envoyer un fluide sous pression qui a été déchargé à partir du moteur hydraulique de la seconde unité de moteur hydraulique à la pompe hydraulique lors du déplacement vers l'avant du véhicule, et
le circuit fermé comprend en outre une première conduite de dérivation (810) qui amène au moins une partie du fluide sous pression dans la première conduite hydraulique à contourner le moteur hydraulique de la première unité de moteur hydraulique pour être fournie à la deuxième conduite hydraulique, et un orifice ( 820) inséré dans la première conduite de dérivation de sorte que la première conduite de dérivation est constamment ouverte en étant étranglée à un degré prédéterminé.

2. Véhicule de travail hydraulique à quatre roues motrices selon la revendication 1, dans lequel la première conduite de dérivation comporte un clapet anti-retour (830) qui empêche le fluide sous pression de circuler depuis la deuxième conduite hydraulique vers la première conduite hydraulique.

3. Véhicule de travail hydraulique à quatre roues motrices selon la revendication 1 ou 2, dans lequel le circuit fermé comprend en outre une deuxième conduite de dérivation (910) qui amène au moins une partie du fluide sous pression dans la troisième conduite hydraulique à contourner le moteur hydraulique de la seconde unité de moteur hydraulique pour être fournie à la deuxième conduite hydraulique, la deuxième conduite de dérivation comportant un orifice (920) et un clapet anti-retour (930) qui sont insérés dans celle-ci, le clapet anti-retour empêchant le fluide sous pression de circuler depuis la deuxième conduite hydraulique vers la troisième conduite hydraulique.

4. Véhicule de travail hydraulique à quatre roues motrices selon l'une quelconque des revendications 1 à 3, dans lequel au moins l'une des première et seconde unités de moteur hydraulique comprend une paire de dispositifs de moteur-roue droit et gauche (500R, 500L ; 600R, 600L), dans lequel chacun de la paire de dispositifs de moteur-roue comprend le moteur hydraulique qui entraîne la roue correspondante, et
dans lequel les moteurs hydrauliques de la paire de dispositifs de moteur-roue sont reliés de manière fluidique en parallèle à la pompe hydraulique.

5. Véhicule de travail hydraulique à quatre roues motrices selon la revendication 4, dans lequel chacun de la paire de dispositifs de moteur-roue droit et gauche comprend le moteur hydraulique et un bloc de ports qui est pourvu d'une paire de passages de fluide d'alimentation et de décharge pour le moteur hydraulique, et
dans lequel l'orifice correspondant est monté sur au moins l'un des blocs de ports de la paire de dispositifs de moteur-roue droit et gauche.

6. Véhicule de travail hydraulique à quatre roues motrices selon l'une quelconque des revendications 1 à 3, dans lequel au moins l'une des première et seconde unités de moteur hydraulique comprend le moteur hydraulique unique, et un dispositif de différentiel mécanique (140) qui transmet la puissance de rotation du moteur hydraulique unique à la paire correspondante de roues droite et gauche d'une manière différentielle de l'une à l'autre.

7. Véhicule de travail hydraulique à quatre roues motrices (1) comprenant au moins une pompe hydraulique (420) entraînée fonctionnellement par une source de puissance d'entraînement (30), une première unité de moteur hydraulique (100) comprenant au moins un moteur hydraulique (120) qui entraîne une paire de premières roues droite et gauche (21R, 21L) agencées sur un côté dans une direction longitudinale du véhicule, et une seconde unité de moteur hydraulique (100E) comprenant au moins un moteur hydraulique (620) qui entraîne une paire de secondes roues droite et gauche (22R, 22L) agencées de l'autre côté dans la direction longitudinale du véhicule, dans lequel au moins l'un de la pompe hydraulique et d'un groupe des moteurs hydrauliques des première et seconde unités de moteur hydraulique est d'un type à cylindrée variable, et dans lequel la pompe hydraulique, le moteur hydraulique de la première unité de moteur hydraulique et le moteur hydraulique de la seconde unité de moteur hydraulique sont reliés de manière fluidique en série les uns aux autres pour former un circuit fermé, le véhicule de travail hydraulique à quatre roues motrices étant **caractérisé en ce que**,
le circuit fermé comprend une première conduite hydraulique (311) pour envoyer un fluide sous pression qui a été évacué à partir de la pompe hydraulique au moteur hydraulique de la première unité de moteur hydraulique lors d'un déplacement vers l'avant du véhicule, une seconde conduite hydraulique (321) pour envoyer un fluide sous pression qui a été déchargé à partir du moteur hydraulique de la première unité de moteur hydraulique au moteur hydraulique de la seconde unité de moteur hydraulique lors du déplacement vers l'avant du véhicule, et une troisième conduite hydraulique (331) pour envoyer un fluide sous pression qui a été déchargé à partir du moteur hydraulique de la seconde unité de moteur hydraulique à la pompe hydraulique lors du déplacement vers l'avant du véhicule,
le circuit fermé comprend en outre une première conduite de dérivation (810) qui amène au moins une partie du fluide sous pression dans la première conduite hydraulique à contourner le moteur hydraulique de la première unité de moteur hydraulique pour être fournie à la deuxième conduite hydraulique, et
une soupape de commutation (890) qui est insérée dans la première conduite de dérivation, et
la soupape de commutation est déplacée vers un état ouvert lorsqu'une pression hydraulique de la première conduite hydraulique devient supérieure ou égale à une valeur de seuil, de telle sorte qu'au moins une partie du fluide sous pression dans la première conduite hydraulique contourne le moteur hydraulique de la première unité de moteur hydraulique pour être fournie à la deuxième conduite hydraulique.
